(19) Europäisches Patentamt / European Patent Office / Office européen des brevets

(11) **EP 3 128 775 B1**

(12) **EUROPEAN PATENT SPECIFICATION**

(45) Date of publication and mention
of the grant of the patent:
**20.05.2020 Bulletin 2020/21**

(21) Application number: **15773734.7**

(22) Date of filing: **20.03.2015**

(51) Int Cl.:
*H04W 24/02* *(2009.01)*      *H04W 16/18* *(2009.01)*
*H04W 48/16* *(2009.01)*

(86) International application number:
**PCT/JP2015/001583**

(87) International publication number:
**WO 2015/151446 (08.10.2015 Gazette 2015/40)**

(54) **COMMUNICATION DEVICE, COMMUNICATION SYSTEM, CONTROL METHOD, AND COMMUNICATION PROGRAM**

KOMMUNIKATIONSVORRICHTUNG, KOMMUNIKATIONSSYSTEM, STEUERUNGSVERFAHREN UND KOMMUNIKATIONSPROGRAMM

DISPOSITIF DE COMMUNICATION, SYSTÈME DE COMMUNICATION, PROCÉDÉ DE COMMANDE ET PROGRAMME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 JP 2014070720**

(43) Date of publication of application:
**08.02.2017 Bulletin 2017/06**

(73) Proprietor: **NEC Corporation**
**Tokyo 108-8001 (JP)**

(72) Inventor: **SHIMIZU, Atsushi**
**Tokyo 108-8001 (JP)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-2013/078573      WO-A1-2013/121798**
**JP-A- 2013 021 450      US-A1- 2010 317 351**
**US-A1- 2011 086 652**

- **NOKIA SIEMENS NETWORKS: "Automatic Physical Cell ID Assignment", 3GPP DRAFT; S5-081185, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20080702, 2 July 2008 (2008-07-02), XP050307771, [retrieved on 2008-07-02]**
- **NOKIA SIEMENS NETWORKS ET AL.: 'SON Use Case: Cell Phy_ID Automated Configuration' 3GPP TSG- RAN WG3 MEETING #59 R3-080376 XP050163582**

**Description**

Technical Field

The present disclosure relates to control of a wireless communication network and relates to control of identification information for identifying a cell in a cellular communication system.

Background Art

A long term evolution (LTE) system serves as an example of cellular communication systems. In the LTE system, a physical cell identifier (PCI) is used as information for identifying a cell.

In PTL 1, a self-organized network (SON) function node assigns a PCI to a cell on the basis of information on neighboring cells. Specifically, the SON function node assigns different PCIs to each of two cells adjacent to each other, on the basis of information on neighboring cells reported from a base station.

In PTL 2, a SON server examines whether interference (inter-cell interference) to an existing HeNB cell (femtocell) causes a problem, and, when the interference causes a problem, adjusts the setting of wireless parameters, such as the transmission power and the antenna tilt angle of the eNB to be installed. However, PTL 2 does not include disclosure relating to control of assignment of cell identification information, such as a PCI.

Citation List

Patent Literature

PTL 1: Japanese Laid-open Patent Publication No. 2010-268463
PTL 2: Japanese Laid-open Patent Publication No. 2012-085201

WO 2013/078573 discloses a method and apparatus for PCI allocation in a cellular network. In the method, a radius R1 of an inner boundary circle C1 of a first cell and a radius R2 of an inner boundary circle C2 of a second cell is estimated according to a cell distance relation model. Signal strengths within C1 and within C2 are greater than a first threshold T respectively. Then a radius R1' of an outer boundary circle C1 ' of the first cell and a radius R2' of an outer boundary circle C2' of the second cell is estimated according to the cell distance relation model. The signal strengths within C1 ' and within C2 ' are greater than a second threshold T' respectively, where T' is lower than T. The second cell is allocated a PCI based on a distance relation between the first cell and the second cell. A distance $S_{1,2}$ between the first cell and the second cell is compared with Max[(Rl'+R2), (R1+R2')], and the second cell will be allocated the same PCI as that of the first cell, if the distance $S_{1,2}$ is greater than Max[(Rl'+R2), (R1+R2')].

US 2010/317351 discloses that additional information is included in or used to generate a positioning reference signal to enable detection of a cell identifier "collision" between two different cells associated with two or more base stations. In one example embodiment, a user equipment terminal detects the collision using the additional information included in or used to generate positioning reference signals sent by two or more base stations and reports the collision to the network, and the network assigns a different cell identifier to one of the colliding cells.

Summary of Invention

Technical Problem

In PTL 1, however, the SON function node assigns PCIs to all the cells included in information on neighboring cells. For this reason, assignment of PCIs allows to change PCIs of all the cells having neighboring relations. Therefore, for example, when the number of neighboring cells is large, the neighboring relations are complex, and the process required for the PCI assignment is complicated. This causes a large load on the SON function node relating to the process.

One cause of these problems is that no determination at all is made in the prior art techniques about whether to assign a PCI to a cell in the first place.

An object of an exemplary embodiment disclosed in the present description is to provide an information processing device which solves the above problems. It should be noted that the object is merely one of the objects attempted to achieve by exemplary embodiments disclosed in the present description. The other objects or problems and novel features are made apparent from the description in the present description or the accompanying drawings.

Solution to Problem

An information processing device according to claim 1 comprises:

a judgment unit configured to judge whether or not at least part of a coverage area of a first cell overlaps with a coverage area of a second cell;

an information acquisition unit configured to acquire second cell identification information previously assigned to identify the second cell, from a storage unit which stores the second cell identification information, from another device, or on the basis of information input; and

a determination unit configured to determine whether first cell identification information for identifying the first cell is identical to the second cell identification information, based on a judgment result of the judgment unit.

A communication system according to claim 8 comprises an information processing device; and a base station connected with the information processing device, wherein
the information processing device includes:

a judgment unit configured to judge whether or not at least part of a coverage area of a first cell overlaps with a coverage area of a second cell;
an information acquisition unit configured to acquire second cell identification information previously assigned to identify the second cell, from a storage unit which stores the second cell identification information, from another device, or on the basis of information input; and
a determination unit configured to determine whether first cell identification information for identifying the first cell is identical to the second cell identification information, based on a judgment result of the judgment unit, wherein the base station receives information acquired based on a determination result of the determination unit.

A method of an information processing device according to claim 9 comprises:

a step of judging whether or not at least part of a coverage area of a first cell overlaps with a coverage area of a second cell;
a step of acquiring second cell identification information previously assigned to identify the second cell, from a storage unit which stores the second cell identification information, from another device, or on the basis of information input; and
a step of determining whether first cell identification information for identifying the first cell is identical to the second cell identification information, based on a judgment result of the judgment.

A storage medium according to claim 10 is a storage medium storing a computer program comprising computer program code means adapted to perform, when executed information processing device, each of the steps of a method comprising:

a step of judging whether or not at least part of a coverage area of a first cell overlaps with a coverage area of a second cell;
a step of acquiring second cell identification information previously assigned to identify the second cell, from a storage unit which stores the second cell identification information, from another device, or on the basis of information input; and
a step of determining whether first cell identification information for identifying the first cell is identical to the second cell identification information, based on a judgment result of the judgment.

Advantageous Effects of Invention

The exemplary embodiments described above enable to reduce the load on the information processing device.

Brief Description of Drawings

Fig. 1 is a block diagram of an information processing device according to a first exemplary embodiment.

Fig. 2A illustrates an example of an overlap relation between a coverage area of a first cell and a coverage area of a second cell.

Fig. 2B illustrates an example of an overlap relation between a coverage area of a first cell and a coverage area of a second cell.

Fig. 3 is a flowchart of operation of the information processing device according to the first exemplary embodiment.

Fig. 4 is a block diagram of an information processing device according to a second exemplary embodiment.

Fig. 5 is a flowchart of operation of the information processing device according to the second exemplary embodiment.

Fig. 6 illustrates an example of an extraction result of candidates for identification information for identifying the first cell.

Fig. 7 is a block diagram of an information processing device according to a third exemplary embodiment.

Fig. 8 is a flowchart illustrating a specific example of a judgment method performed in a judgment unit.

Fig. 9 is one of flowcharts illustrating specific examples of a determination method performed in a determination unit.

Fig. 10 is one of the flowcharts illustrating specific examples of the determination method performed in the determination unit.

Fig. 11 is a flowchart of operation of the information processing device according to the third exemplary embodiment.

Fig. 12 is a block diagram illustrating a configuration example of a communication system according to the first to the third exemplary embodiments.

Fig. 13 is a block diagram of an information processing device according to a fourth exemplary embodiment.

Fig. 14 is a flowchart of operation of the information processing device according to the fourth exemplary embodiment.

Fig. 15 is a diagram illustrating an example of a method of calculating a coverage area.

Fig. 16 is a flowchart illustrating an example of a method of setting neighboring cells.

Description of Embodiments

Exemplary embodiments will be explained below in detail with reference to the drawings. In the drawings, the same reference numeral is assigned to the same or corresponding elements, and a redundant description thereof is omitted where appropriate, to make the explanation clear.

Multiple exemplary embodiments to be explained below can be carried out independently, or in proper combinations. These multiple exemplary embodiments have novel features different from each other. Accordingly, the multiple exemplary embodiments contribute to solving problems or achieving objects different from each other, and contribute to producing effects different from each other.

<First Exemplary Embodiment>

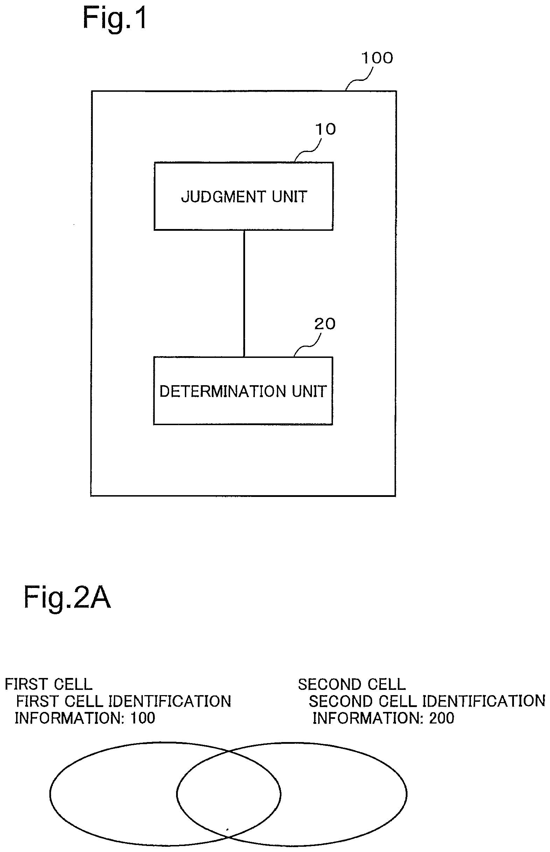

Fig. 1 illustrates an example of a configuration of an information processing device according to a first exemplary embodiment.

An information processing device 100 includes at least a judgment unit 10 and a determination unit 20.

The judgment unit 10 judges whether at least part of a coverage area of a first cell overlaps with a coverage area of a second cell.

The determination unit 20 determines whether first cell identification information for identifying the first cell is identical to second cell identification information assigned in advance to identify the second cell, on the basis of a judgment result of the judgment unit.

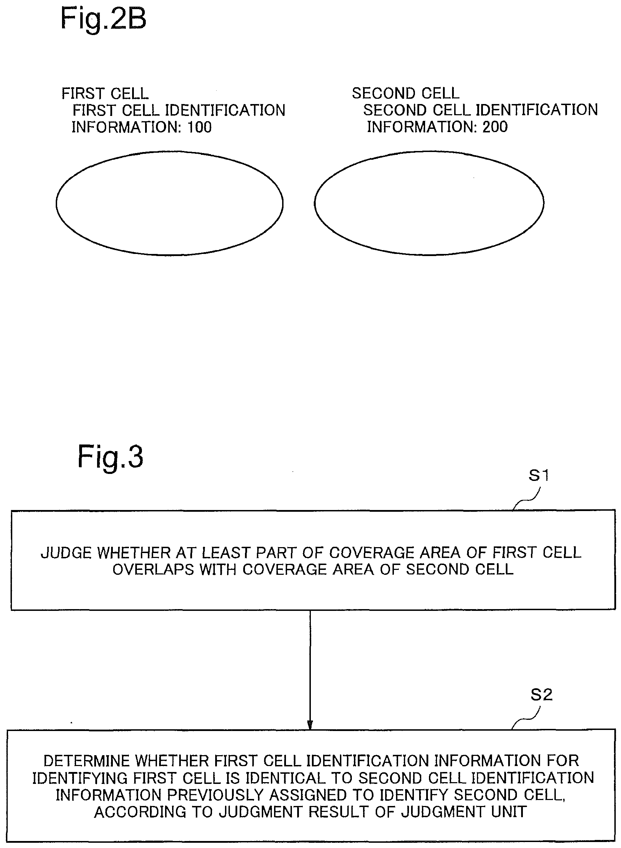

Fig. 2A and Fig. 2B illustrate examples of an overlap relation between the coverage area of the first cell and the coverage area of the second cell. For the first cell, "100" is set as the first cell identification information. For the second cell, "200" is set as the second cell identification information. The first cell identification information and the second cell identification information are information for identifying the first cell and information for identifying the second cell, respectively. The first cell identification information and the second cell identification information have already been set in Fig. 2A and Fig. 2B, however, it is possible that information for identifying the cell is not set for one of the cells or both the cells.

Next, operation of the information processing device 100 according to the first exemplary embodiment will be explained with reference to Fig. 3.

In Step S1, the judgment unit 10 judges whether at least part of the coverage area of the first cell overlaps with the coverage area of the second cell. For example, in the case of Fig. 2A, the judgment unit 10 judges that at least part of the coverage area of the first cell overlaps with the coverage area of the second cell. Moreover, in the case of Fig. 2B, the judgment unit 10 judges that at least part of the coverage area of the first cell does not overlap with the coverage area of the second cell. The judgment result may have any details as long as indicating the result of the judgment.

In Step S2, the determination unit 20 determines whether first cell identification information for identifying the first cell is identical to second cell identification information assigned in advance to identify the second cell, on the basis of the judgment result obtained by the judgment unit. For example, in the case of Fig. 2A or Fig. 2B, since the first cell identification information is different from the second cell identification information, the determination unit 20 determines that the first cell identification information is not identical to the second cell identification information. Assuming the case where no first cell identification information is set and the second cell identification information is assigned in advance, no first cell identification information exists. Hence, the determination unit 20 determines that the first cell identification information is at least not identical to the second cell identification information. Moreover, assuming the case where 100 is set as the first cell identification information and 100 is assigned in advance as the second cell identification information, the first cell identification information is the same as the second cell identification information. Hence, the determination unit 20 determines that the first cell identification information is identical to the second cell identification information.

As described above, the information processing device 100 according to the first exemplary embodiment judges whether at least part of the coverage area of the first cell overlaps with the coverage area of the second cell, and determines whether the first cell identification information for identifying the first cell is identical to the second cell identification information assigned in advance to identify the second cell, based on a judgment result of the judgment unit. With this configuration, the information processing device 100 according to the first exemplary embodiment has the effect of reducing the load on the information processing device 100.

<Second Exemplary Embodiment>

A second exemplary embodiment illustrates a modified example of the first exemplary embodiment described above.

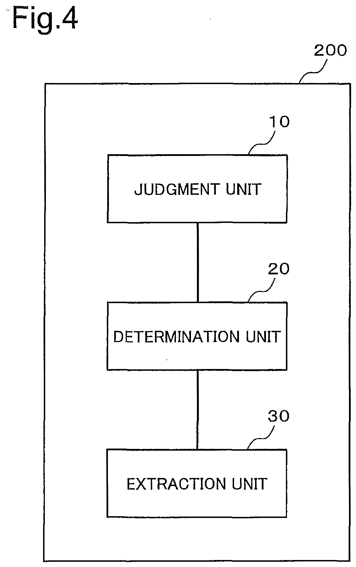

Fig. 4 illustrates an example of a configuration of an information processing device according to the second exemplary embodiment.

An information processing device 200 includes at least the judgment unit 10, the determination unit 20, and an extraction unit 30. The judgment unit 10 and the determination unit 20 are the same as those of the first exemplary embodiment. The extraction unit 30 extracts candidates for identification information for identifying the first cell, on the basis of a determination result obtained by the determination unit.

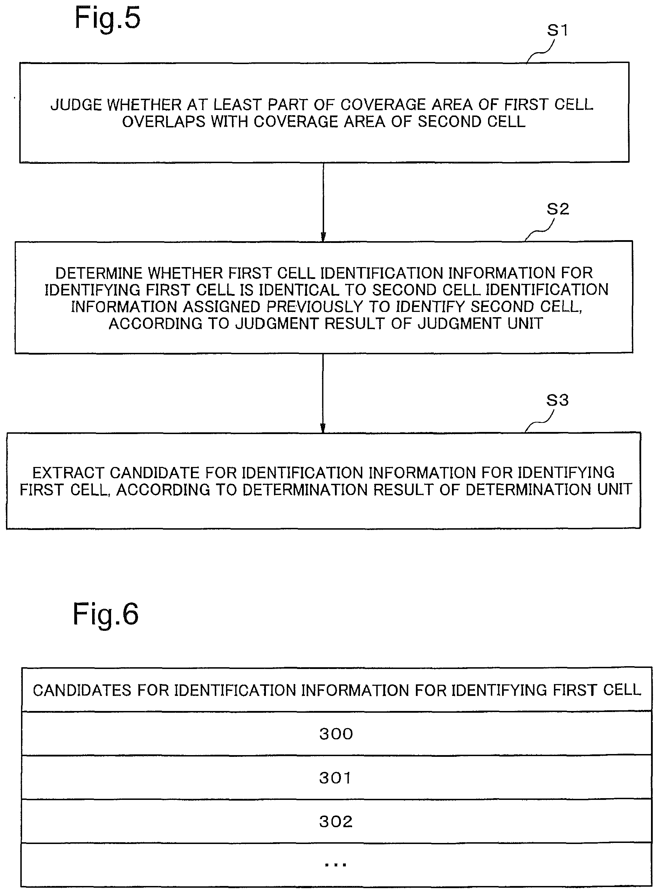

Next, the operation of the information processing device 200 according to the second exemplary embodiment will be explained with reference to Fig. 5.

Step S1 and Step S2 are the same as those in the first exemplary embodiment. In Step S3, the extraction unit 30 extracts candidates for identification information for identifying the first cell, on the basis of a determination result obtained by the determination unit. Fig. 6 illustrates an example of an extraction result obtained by the extraction unit 30.

As described above, the information processing device 200 according to the second exemplary embodiment extracts candidates for the identification information for identifying the first cell, on the basis of the determination result obtained by the determination unit. With this configuration, the information processing device 200 according to the second exemplary embodiment can extract candidates.

<Third Exemplary Embodiment>

A third exemplary embodiment illustrates a modified example of the first exemplary embodiment or the second exemplary embodiment described above.

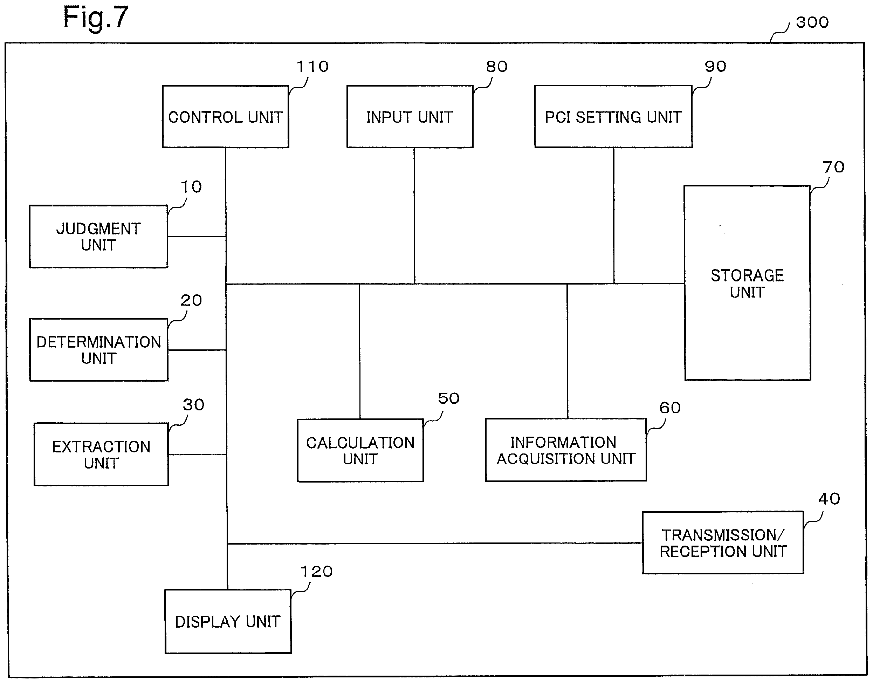

Fig. 7 illustrates an example of a configuration of an information processing device according to the third exemplary embodiment.

An information processing device 300 includes at least the judgment unit 10, the determination unit 20, the extraction unit 30, a transmission/reception unit 40, a calculation unit 50, an information acquisition unit 60, a storage unit 70, an input unit 80, a PCI setting unit 90, a control unit 110, and a display unit 120. The judgment unit 10, the determination unit 20, and the extraction unit 30 are the same as those of the second exemplary embodiment.

The transmission/reception unit 40 is connected with an external device in a wired or wireless manner to thereby transmit and receive various pieces of information to and from the external device.

The calculation unit 50 calculates the coverage area of the first cell and the coverage area of the second cell. The calculation unit 50 may calculate one of the coverage area of the first cell and the coverage area of the second cell or may calculate both of them. In addition, when the storage unit 70 stores information relating to the coverage area of the first cell or the coverage area of the second cell, the calculation unit 50 may use the stored information. Further, when the information is not stored in the storage unit 70, the calculation unit 50 may obtain the information from another device.

As the calculation result, the coverage area may be mapped on a two-dimensional plane, for example. The map is not limited to a map formed on a two-dimensional plane, but may also be formed on a one-dimensional axis, or in a three-dimensional space.

The calculation unit 50 may calculate the coverage area of the first cell and the coverage area of the second cell by using two axes, regarding each of the coverage areas as a two-dimensional plane. Specifically, for example, the calculation unit 50 may use two parameters of latitude and longitude as axes, to calculate the coverage area of the first cell.

The information acquisition unit 60 acquires the second cell identification information of the second cell. For example, when the second cell identification information of the second cell is stored in the storage unit 70, the information acquisition unit 60 may acquire the information from the storage unit 70. In addition, when the information is not stored in the storage unit 70, the information acquisition unit 60 may acquire the information from another device. The information acquisition unit 60 may acquire the second cell identification information of the second cell on the basis of information input to the input unit 80.

The storage unit 70 stores various pieces of information. For example, the storage unit 70 stores information relating to the coverage area of the first cell, information relating to the coverage area of the second cell, the second cell identification information of the second cell, and the like.

The input unit 80 inputs various pieces of information. For example, the input unit 80 inputs information relating to the coverage area of the first cell, information relating to the coverage area of the second cell, the first cell identification information of the first cell, and the second cell identification information of the second cell, and the like.

The PCI setting unit 90 sets, for the first cell, identification information for identifying the first cell.

The control unit 110 controls each of the constituent units included in the information processing device 300.

The display unit 120 displays candidates for the identification information for identifying the first cell, which are an extraction result extracted by the extraction unit 30.

Here, the information relating to the coverage area of the first cell is, for example, latitude information and longitude information indicating the coverage area of the first cell, an antenna tilt angle of a base station that controls the first cell, a transmission power of the base station, the type of the base station (for example, information as to whether the base station is a macrocell base station or a microcell base station), a PCI, an E-UTRAN cell global identifier (ECGI), a public land mobile network identity (PLMN ID), an E-UTRAN cell identifier (ECI), a primary scrambling code (PSC), or altitude information of the base station that are set for the first cell.

The first cell identification information of the first cell is, for example, latitude information and longitude information indicating the coverage area of the first cell, frequency information relating to the frequency used in the first cell, or information for specifying the cell, such as a PCI, ECGI, PLMN ID, ECI, and PSC that are set for the first cell.

Next, operation of the information processing device 300 according to the third exemplary embodiment will be explained. The following explanation mainly illustrates the differences between the above-described exemplary embodiments.

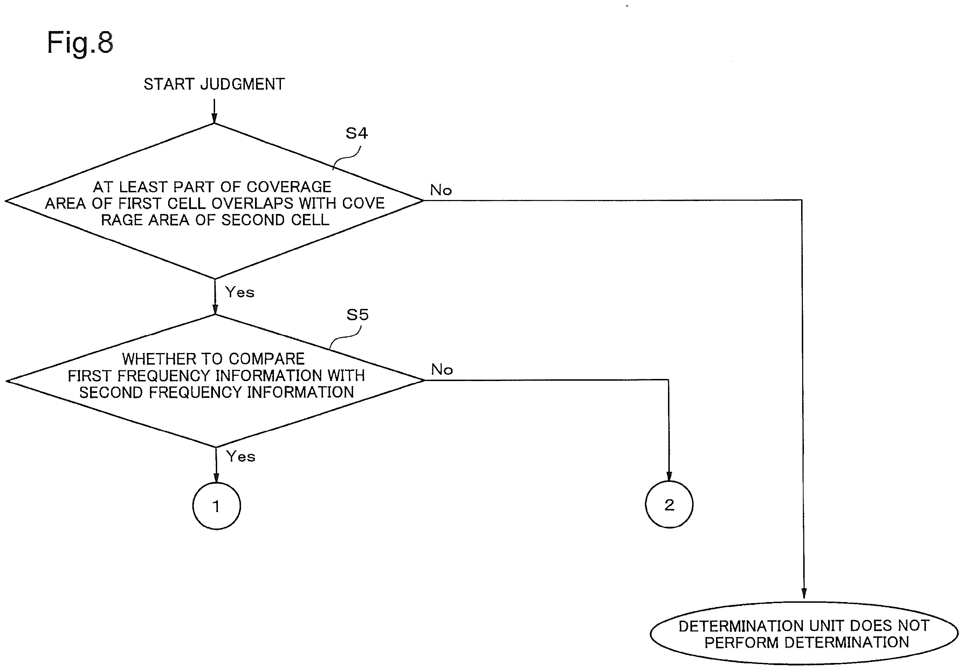

First, the details of Step S1 illustrated in Fig. 5 will be explained with reference to Fig. 8.

In Step S4, the judgment unit 10 judges whether at least part of the coverage area of the first cell overlaps with the coverage area of the second cell. When a judgment result of Step S4 indicates that "at least part of the coverage area of the first cell does not overlap with the coverage area of the second cell" (Step S4: NO), the determination unit 20 does not perform determination as to whether the first cell identification information for identifying the first cell is identical to the second cell identification information assigned in advance to identify the second cell. As described above, since the determination unit 20 operates on the basis of the judgment result, the determination unit 20 operates only when determination is required. This structure enables power saving and reduction in load of the information processing device 300.

Next, when a judgment result of Step S4 indicates that "at least part of the coverage area of the first cell overlaps with the coverage area of the second cell" (Step S4: YES), the determination unit 20 judges whether to determine whether the first cell identification information for identifying the first cell is identical to the second cell identification information assigned in advance to identify the second cell. For example, the determination unit 20 chooses whether to determine whether first frequency information serving as the first cell identification information is identical to second frequency information serving as the second cell identification information (Step S5).

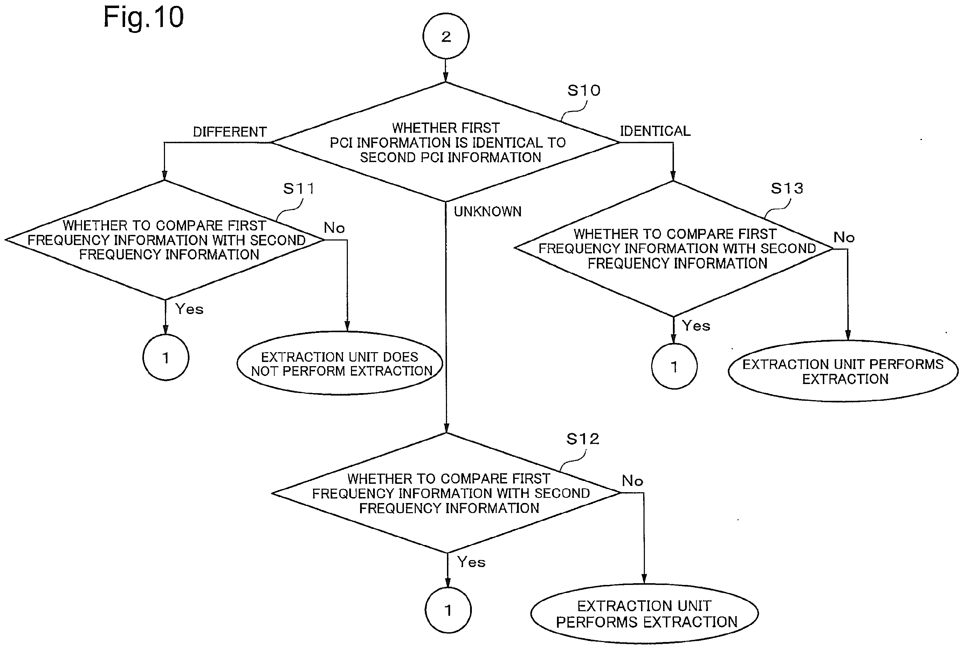

When a judgment result of Step S5 indicates "not to determine whether the first frequency information serving as the first cell identification information is identical to the second frequency information serving as the second cell identification information (Step S5: NO), the determination unit 20 compares first PCI information of the first cell with second PCI information of the second cell. The details of the process for the comparison will be illustrated later in the explanation of Step S10 and the subsequent steps in Fig. 10.

By contrast, when a judgment result of Step S5 indicates "to determine whether the first frequency information serving as the first cell identification information is identical to the second frequency information serving as the second cell identification information (Step S5: YES), the determination unit 20 compares first frequency information of the first cell with second frequency information of the second cell.

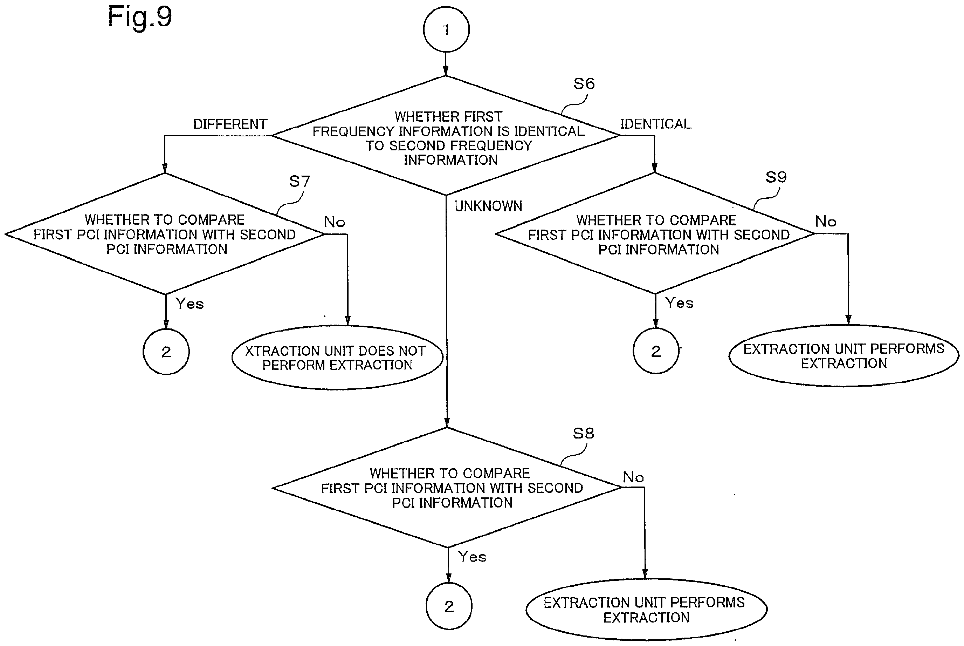

Next, the subsequent processing when the judgment result of Step S5 in Fig. 8 is YES will be explained with reference to Fig. 9.

When a judgment result of Step S5 in Fig. 8 is YES, the determination unit 20 performs the processing of Step S6 of Fig. 9.

In Step S6, the determination unit 20 determines whether the first frequency information of the first cell is identical to the second frequency information of the second cell.

<The Case where the First Frequency Information is Different from the Second Frequency Information>

When a determination result of Step S6 indicates that "the first frequency information of the first cell is different from the second frequency information of the second cell" (Step S6: different), the determination unit 20 performs the processing of Step S7. In Step S7, the determination unit 20 chooses whether to perform a PCI information determination process for determining whether the first PCI information of the first cell is identical to the second PCI information of the second cell.

In Step S7, when the determination unit 20 chooses not to perform the PCI information determination process (Step S7: NO), the extraction unit 30 does not extract candidates for identification information for identifying the first cell. As described above, since the extraction unit 30 operates on the basis of the determination result of the determination unit 20, the extraction unit 30 can be configured to perform the extraction process only when necessary. In other words, since the extraction unit 30 is configured in such a that the hardware or software processing relating to the extraction unit 30 is performed only when predetermined conditions are satisfied, this enables power saving and load reduction of the whole information processing device 300 including the extraction unit 30.

By contrast, in Step S7, when the determination unit 20 chooses to perform the PCI information determination process (Step S7: YES), the determination unit 20 compares the first PCI information of the first cell with the second PCI information of the second cell. The details of the process for the comparison will be illustrated later in the explanation of Step S10 and the subsequent steps in Fig. 10.

<The Case where it is Unknown Whether the First Frequency Information is Identical to the Second Frequency Information>

Next, when a determination result of Step S6 indicates that "it is unknown whether the first frequency information of the first cell is identical to the second frequency information of the second cell" (Step S6: unknown), the determination unit 20 performs the processing of Step S8. In Step S8, the determination unit 20 chooses whether to determine whether the first PCI information of the first cell is identical to the second PCI information of the second cell.

The case where the determination result of Step S6 indicates that "it is unknown whether the first frequency information of the first cell is identical to the second frequency information of the second cell" is, for example, a case where the information processing device 300 lacks a comparison target, such as the case where at least one of the first frequency information and the second frequency information is not set.

In Step S8, when the determination unit 20 chooses not to determine whether the first PCI information is identical to the second PCI information (Step S8: NO), the extraction unit 30 extracts candidates for identification information for identifying the first cell on the basis of the determination result of the determination unit 20. By contrast, in Step S8, when the determination unit 20 chooses to determine whether the first PCI information is identical to the second PCI information (Step S8: YES), the determination unit 20 compares the first PCI information of the first cell with the second PCI information of the second cell. The details of the process for the comparison will be illustrated later in the explanation of Step S10 and the subsequent steps in Fig. 10.

<The Case where the First Frequency Information is Identical to the Second Frequency Information>

When a determination result of Step S6 indicates that "the first frequency information of the first cell is identical to the second frequency information of the second cell" (Step S6: identical), the determination unit 20 performs the processing of Step S9. In Step S9, the determination unit 20 chooses whether to perform the PCI information determination process for determining whether the first PCI information of the first cell is identical to the second PCI information of the second cell.

In Step S9, when the determination unit 20 chooses not to perform the PCI information determination process (Step S9: NO), the extraction unit 30 extracts candidates for identification information for identifying the first cell on the basis of the determination result of the determination unit. By contrast, in Step S9, when the determination unit 20 chooses to determine whether the first PCI information is identical to the second PCI information (Step S9: YES), the determination unit 20 compares the first PCI information of the first cell with the second PCI information of the second cell. The details of the process for the comparison will be illustrated later in the explanation of Step S10 and the subsequent steps in Fig. 10.

Next, the process related to comparison between the first PCI information of the first cell with the second PCI information of the second cell will be explained with reference to Fig. 10.

In Step S10, the determination unit 20 determines whether the first PCI information of the first cell is identical to the second PCI information of the second cell.

<The Case where First PCI Information is Different from Second PCI Information>

When a determination result of Step S10 indicates that "the first PCI information of the first cell is different from the second PCI information of the second cell" (Step S10: different), the determination unit 20 performs the processing of Step S11. In Step S11, the determination unit 20 chooses whether to perform a frequency information determination process for determining whether the first frequency information of the first cell is identical to the second frequency information of the second cell.

In Step S11, when the determination unit 20 chooses not to perform frequency information determination process (Step S11: NO), the extraction unit 30 does not extract candidates for identification information for identifying the first cell. As described above, since the extraction unit 30 operates on the basis of the determination result of the determination unit 20, the extraction unit 30 can be configured to perform the extraction process only when necessary. In other words, since the extraction unit 30 is configured in such a way that the hardware or software processing relating to the extraction unit 30 is performed only when predetermined conditions are satisfied, this enables power saving and load reduction of the whole information processing device 300 including the extraction unit 30.

By contrast, in Step S11, when the determination unit 20 chooses to perform frequency information determination process (Step S11: YES), the determination unit 20 compares the first frequency information of the first cell with the second frequency information of the second cell.

<The Case where it is Unknown Whether the First PCI Information is Identical to the Second PCI Information>

Next, when a determination result of Step S10 indicates that "it is unknown whether the first PCI information of the first cell is identical to the second PCI information of the second cell" (Step S10: unknown), the determination unit 20 performs the processing of Step S12. In Step S12, the determination unit 20 chooses whether to perform the frequency information determination process for determining whether the first frequency information of the first cell is identical to the second frequency information of the second cell.

The case where the determination result of Step S10 indicates that "it is unknown whether the first PCI information of the first cell is identical to the second PCI information of the second cell" refers to a case where the information processing device 300 lacks a comparison target, such as a case where at least one of the first PCI information of the first cell and the second PCI information of the second cell is not set.

In Step S12, when the determination unit 20 chooses not to perform the frequency information determination process (Step S12: NO), the extraction unit 30 extracts candidates for identification information for identifying the first cell on the basis of the determination result of the determination unit. By contrast, in Step S12, when the determination unit 20 chooses to perform the frequency information determination process (Step S12: YES), the determination unit 20 compares the first frequency information of the first cell with the second frequency information of the second cell.

<The Case where the First PCI Information is Identical to the Second PCI Information>

When a determination result of Step S10 indicates that "the first PCI information of the first cell is identical to the second PCI information of the second cell" (Step S10: identical), the determination unit 20 performs the processing of Step S13. In Step S13, the determination unit 20 chooses whether to perform the frequency information determination process for determining whether the first frequency information of the first cell is identical to the second frequency information of the second cell.

In Step S13, when the determination unit 20 chooses not to perform the frequency information determination process (Step S13: NO), the extraction unit 30 extracts candidates for identification information for identifying the first cell on the basis of the determination result of the determination unit. By contrast, in Step S13, when the determination unit 20 chooses to perform the frequency information determination process (Step S13: YES), the determination unit 20 compares the first frequency information of the first cell with the second frequency information of the second cell.

Although the determination unit 20 performs the processing of Steps S7, S8, S9, S11, S12, and S13, the subject that performs the processing is not limited to the information processing device 300, but may also be the operator who operates the information processing device 300, the base station that performs wired or wireless communication with the information processing device 300, a control device, an element management system (EMS) device, or the like.

In addition, for example, when YES is selected in Step S7, such setting may be made as to avoid selection of YES in Steps S11, S12, and S13.

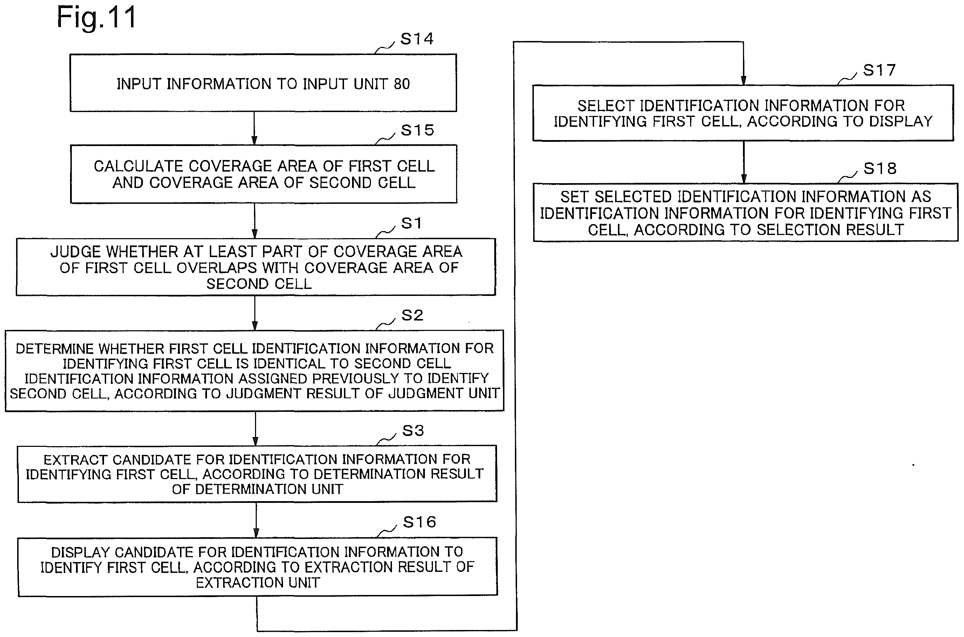

Fig. 11 illustrates operations of setting cell identification information in the information processing device 300.

In Step S14, the input unit 80 inputs various pieces of information. The input information may be information stored in the storage unit 70 in the information processing device 300. Moreover, the subject that inputs the information may be the operator who operates the information processing device 300, the base station that performs wired or wireless communication with the information processing device 300, a control device (such as a mobility management entity (MME)) that controls the base station, an EMS device, or the like.

Thereafter, in Step S15, the calculation unit 50 calculates the coverage area of the first cell and the coverage area of the second cell on the basis of the information input to the input unit 80 in Step S14.

The calculation unit 50 may calculate one of the coverage area of the first cell and the coverage area of the second cell or may calculate both of them. In addition, when the storage unit 70 stores information relating to the coverage area of the first cell or the coverage area of the second cell, the calculation unit 50 may use the stored information. Further, when the information is not stored in the storage unit 70, the calculation unit 50 may acquire the information from another device.

In addition, as the calculation result, the coverage area may be mapped on a two-dimensional plane, for example. The map is not limited to a map formed on a two-dimensional plane, but may also be formed on a one-dimensional axis, or in a three-dimensional space.

Step S1, Step S2, and Step S3 are the same as those in the first and the second exemplary embodiments.

In Step S16, the display unit 120 displays candidates for identification information for identifying the first cell, which are an extraction result extracted by the extraction unit 30.

In Step S17, the information processing device 300 selects identification information for identifying the first cell on the basis of the display on the display unit 120. The subject that performs selection is not limited to the information processing device 300, but may also be the operator who operates the information processing device 300, the base station that performs wired or wireless communication with the information processing device 300, a control device, an EMS device, or the like. In addition, Step S16 may be omitted to proceed to Step S17, without displaying candidates for identification information for identifying the first cell extracted in Step S3. In this case, in Step S17, the identification information for identifying the first cell may be selected on the basis of the information extracted in Step S3.

In Step S18, the PCI setting unit 90 sets, for the first cell, the identification information for identifying the first cell.

As described above, in the information processing device 300 according to the third exemplary embodiment, the determination unit 20 and the extraction unit 30 can be operated when necessary, on the basis of the judgment result of the judgment unit 10 and the determination result of the determination unit 20. Specifically, the information processing device 300 according to the third exemplary embodiment enables detailed control as to whether to operate the determination unit 20 and the extraction unit 30, and thus enables power saving and reduction in load of the information processing device 300.

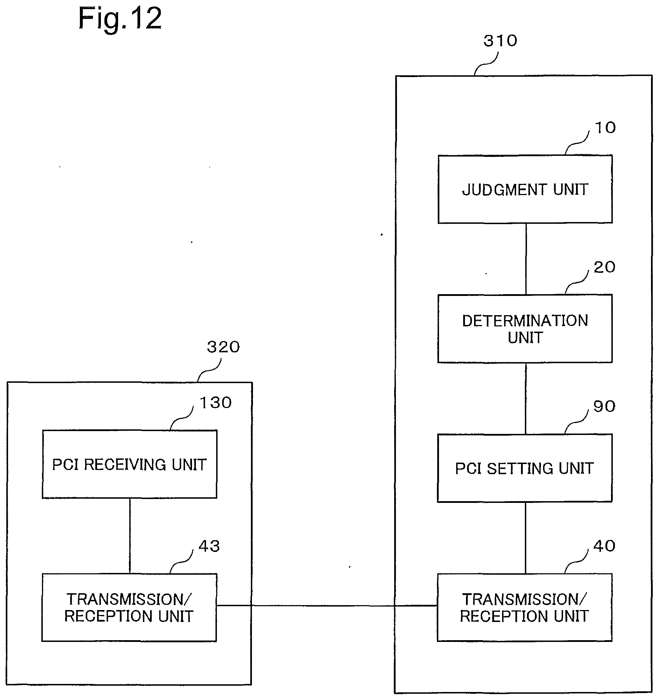

When part of the third exemplary embodiment is applied to a system formed of an EMS device 310 and a base station 320, for example, the configuration as illustrated in Fig. 12 is conceivable.

The EMS device 310 is capable of performing wireless or wired communication with the base station 320. The EMS device 310 is capable of determining a PCI to be assigned to the base station 320.

The base station 320 is capable of performing wireless or wired communication with the EMS device 310. The base station 320 is capable of receiving the PCI assigned by the EMS device 310 as the PCI for the base station 320 itself.

A PCI receiving unit 130 receives the PCI assigned by the EMS device 310 as the PCI for the PCI receiving unit 130 itself.

A transmission/reception unit 43 transmits and receives various pieces of information to and from the EMS device 310 by wireless or wired communication.

<Fourth Exemplary Embodiment>

A fourth exemplary embodiment illustrates a modified example of the first, the second, or the third exemplary embodiment described above.

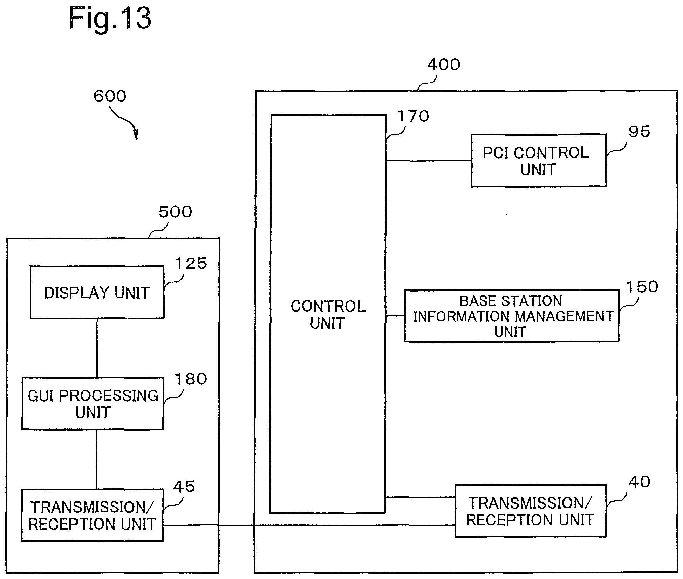

Fig. 13 illustrates an example of a configuration of a communication system 600 according to the fourth exemplary embodiment.

The communication system 600 illustrated in Fig. 13 includes an EMS device 400 configured to manage each of devices (elements) forming the network, and an EMS client device 500 managed by the EMS device 400.

The EMS device 400 includes at least a PCI control unit 95, a neighboring-cell addition instruction unit 140, a base station information management unit 150, a station construction control unit 160, a transmission/reception unit 40, and a control unit 170.

The PCI control unit 95 includes at least the storage unit 70, the calculation unit 50, the determination unit 20, and the extraction unit 30 of the third exemplary embodiment described above.

The base station information management unit 150 includes at least the judgment unit 10 and the information acquisition unit 60 of the third exemplary embodiment.

The transmission/reception unit 40 is connected with an external device in a wired or wireless manner, and transmits and receives various pieces of information to and from the external device.

The control unit 170 controls each of the constituent units included in the EMS device 400.

Further, the EMS client device 500 includes a graphical user interface (GUI) unit 125, a GUI processing unit 180, and a transmission/reception unit 45.

The GUI unit 125 outputs information when the GUI unit 125 is instructed from the GUI processing unit 180 to output the information, and notifies the GUI processing unit 180 of the information input from an external element. The GUI unit 125 includes at least part of the input unit 80 and the display unit 120 of the third exemplary embodiment.

The GUI processing unit 180 instructs the GUI unit 125 to output information, and outputs, to the transmission/reception unit 45, information that is input from the external element to the GUI unit 125. The GUI processing unit 180 may include at least part of the input unit 80 of the third exemplary embodiment.

Next, operations of the communication system 600 according to the fourth exemplary embodiment will be explained.

This explanation illustrates the case where a new base station is established (at the time of base station installation), as an example.

Next, operations of the communication system 600 according to the fourth exemplary embodiment will be described.

This explanation illustrates the case where an operator install a new base station, as an example.

When constructing a base station, the GUI unit 125 receives input of system parameters of the base station including latitude and longitude information, neighboring cell information, the cell size, and the like of the base station to be constructed.

When the GUI processing unit 180 detects that the PCI of the base station to be constructed is input to the GUI unit 125, the GUI processing unit 180 transfers the latitude and longitude information, the PCI, and a cell radius parameter that have already been input, to the PCI control unit 95 through the transmission/reception unit 45 and the transmission/reception unit 40.

The cell radius parameter is an example of information indicating the radius of the coverage area of the cell.

The PCI control unit 95 calculates the coverage area of the cell of the base station to be constructed, on the basis of the latitude and longitude information by using the latitude and longitude information and the cell radius parameter. Thereafter, the PCI control unit 95 inquires to the base station information management unit 150 whether there is any cell at least part of which overlaps with the calculated coverage area of the cell of the base station to be constructed.

The coverage area of the cell corresponds to a area of an LTE cell in an LTE system.

The base station information management unit 150 transfers, to the PCI control unit 95, PCIs of the existing base stations each having a cell area overlapping with the coverage area of the cell of the base station to be constructed.

The PCI control unit 95 examines, for each of the PCIs of the existing base stations that are received from the base station information management unit 140 and that have the overlapping coverage area, whether the PCI is identical to the input PCI of the base station to be constructed.

As a result of the examination, when there are identical PCIs, the PCI control unit 95 transfers, to the GUI processing unit 180, a list of PCIs of the existing base stations, the PCIs having overlaps.

The GUI processing unit 180 displays, on the GUI unit 125, the result indicating that the input PCI is identical to the PCIs of the existing base stations. In addition, the GUI processing unit 180 displays, on the GUI unit 125, a message that the received list of the PCIs of the existing base stations should not be used.

Upon receiving an operation to display a neighboring cell setting screen of the base station to be installed from the external device, the GUI processing unit 180 requests the PCI control unit 95 to acquire the PCI of a recommended neighboring cell. This request includes the frequency band of the cell.

The PCI control unit 95 that has received the request for acquiring PCI of the recommended neighboring cell transfers, to the base station information management unit 150, information relating to the latitude and the longitude of the already calculated coverage area of the cell of the base station to be constructed. Thereby, the PCI control unit 95 acquires the PCIs of the existing base stations each having a value overlapping with the acquired value and acquires frequencies of the cells to which the respective PCIs are assigned. The PCI control unit 95 makes a list of PCIs for each of inter frequency and intra frequency on the basis of the information acquired from the base station information management unit 150, and transfers the list to the GUI processing unit 180.

The GUI processing unit 180 displays, on the GUI unit 125, the PCI list received from the PCI control unit 95 as "recommended neighboring-cell information".

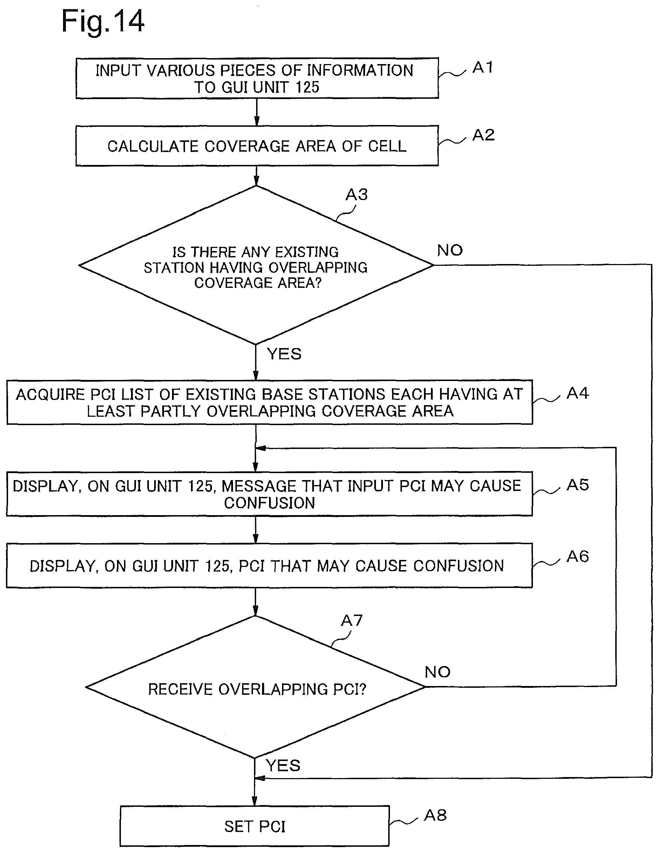

Next, operations of the communication system 600 according to the fourth exemplary embodiment will be explained in more detail with reference to Fig. 14.

Fig. 14 is a flowchart illustrating operations performed by the EMS device 400 when setting a PCI of the base station to be constructed.

In Step A1, the GUI processing unit 130 detects input of various pieces of information to the GUI unit 125. As the various pieces of information, the input latitude and longitude (including the direction) and a cell radius (the radius of an LTE cell), for example, are received. The cell radius (CR) is not limited to a value input by the operator, but a preset value (a default value, for example) is also valid.

In Step A2, the PCI control unit 95 that has received the information the input of which has been detected by the GUI processing unit 130 calculates the coverage area of the cell of the base station to be constructed.

The following illustrates an example of a method of calculating the coverage area of the cell of the base station to be constructed.

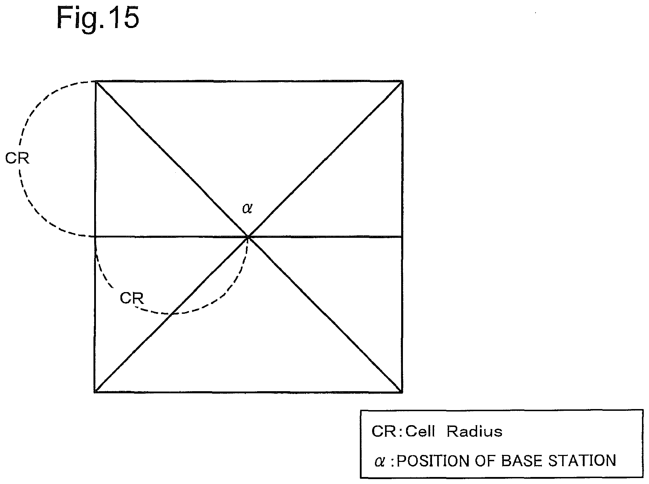

In the example, since calculation for a cell having a circular shape is complicated, the coverage area is calculated as a square area as illustrated in Fig. 15. In addition, the globe is spherical and essentially the distance per 1° in longitude differs according to the latitude, but the difference is ignored by supposing that the surface of the globe is a flat plane since the distance is small.

Longitude difference:

$$X = \sin 45° * (360° * Cell\ Radius/6378.137).$$

Latitude difference:

$$Y = \cos 45° * (360° * Cell\ Radius/6378.137),$$

where 6378.137 is the radius of the globe [km].

Accordingly, the coverage area of the cell of the base station to be constructed is as follows.

Latitude of base station -Y ≤ cell area (latitude) ≤ latitude of base station + Y,

Longitude of base station -X ≤ cell area (latitude) ≤ longitude of base station + X.

Note that the direction is reversed when the sign of the value is minus.

The information relating to the coverage area of the cell of the base station to be constructed is temporarily held in the EMS device 400 until the station construction is completed, and the held information is stored in the base station information management unit 150 when the station construction is completed. The information is discarded when the station construction is discontinued.

In Step A3, the PCI control unit 95 compares each of the coverage areas of the cells of the existing base stations stored in advance in the base station information management unit 150, with the previously calculated coverage area of the cell of the base station to be constructed, to confirm whether there is any cell having an overlapping area, even partially.

In the comparison, when none of the existing base stations has an overlapping coverage area (Step A3: NO), the received PCI is used as a system parameter without any further processing.

Note that a PCI of the cell having the closest latitude and longitude position may be obtained, and the process may then proceed to A5.

Next, when any of the existing base stations has an overlapping coverage area (Step A3: YES), the process proceeds to Step A4, and a list of PCIs of the existing base stations determined in A3 is obtained.

In Step A5, a message that the input PCI may cause confusion is displayed on the GUI unit 125. For example, the message indicating "the input PCI: xxx overlaps with the peripheral cells, and PCI confusion may be detected" is displayed on the GUI unit 125.

However, an operation such as "ignore the message and continue" may be allowed in order to only notify of the message as information and enable to use the received value as a system parameter.

The term "confusion" means that PCIs of two cells adjacent to each other are identical to each other. The same PCI of two neighboring cells causes the problem that serious interference may occur between the cells, or the like.

In Step A6, PCIs that may cause confusion are displayed on the GUI unit 125. For example, the list of PCIs acquired in A4 is displayed as "PCIs existing nearby" on the GUI.

In Step A7, whether to accept duplicate PCI is determined.

When it is determined to accept the duplicate PCI, the input PCI is set for the base station to be constructed.

When it is determined not to receive the overlapping PCI, or when a PCI input is received from the operator again and the received PCI does not overlap with the values presented in A6, the received PCI is used as a system parameter without any processing. When an overlapping PCI is input, the process returns to A5.

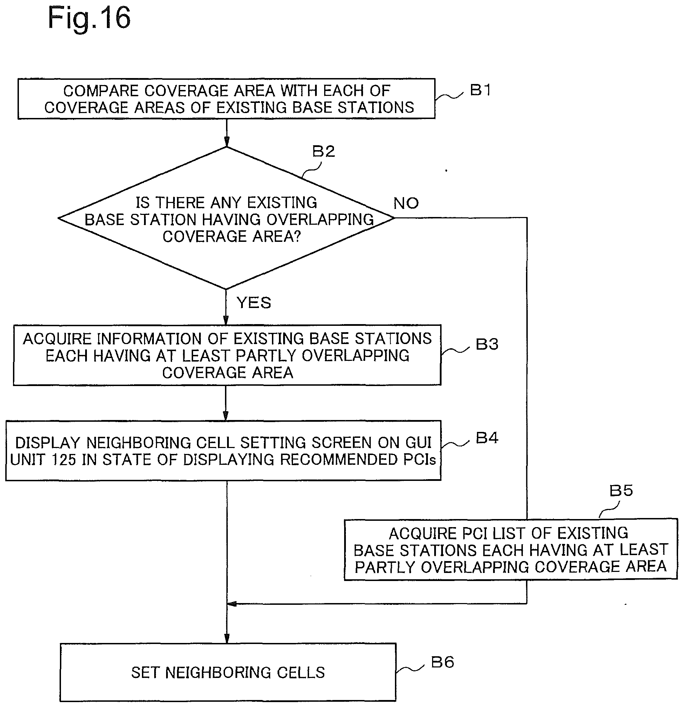

Next, Fig. 16 is a flowchart illustrating operations of the EMS device 400 for setting neighboring cells of the base station to be constructed.

Following the operation of Step A8 in Fig. 14, in Step B1 in Fig. 16, the operator requests for a screen to register neighboring cells of the base station to be constructed and the EMS device 400 receives the request. In addition, the EMS device 400 reads the cell area information calculated in Step A2 in Fig. 14 from the memory or the like, and acquires the frequency band that has already been set. Since it is supposed that the system parameter with the set default value is edited in many cases, a default value may be acquired when the above has not been set.

In Step B2, the EMS device 400 acquires information relating to the cell from the base station information management unit 150, to compare the coverage area acquired in Step B1 with the coverage areas of the existing base stations, to determine whether any of the coverage areas overlaps. In addition, the EMS device 400 examines whether any existing base station with an overlapping coverage area exists.

In Step B2, when the EMS device 400 judges that no existing base station with an overlapping coverage area exists (Step B2: NO), the EMS device 400 displays the neighboring-cell setting screen on the GUI unit 125. Note that the EMS device 400 may acquire the PCI of the geographically closest existing base station to perform the operations of Step B3 and the subsequent steps.

Thereafter, in Step B2, when the EMS device 400 judges that existing base stations each with an overlapping coverage area exist (Step B2: YES), the EMS device 400 performs the processing of Step B3. In Step B3, the EMS device 400 acquires information of the existing base stations each with an overlapping coverage area. Specifically, the EMS device 400 acquires the frequency bands and the PCIs of the existing base stations each with an overlapping coverage area, through the base station information management screen.

Here, the acquired PCIs may be held as a PCI list. The PCI list may be a list of PCIs of the existing base stations for each frequency band.

For example, the list may be made by dividing into a list of PCIs of frequency bands different from that of the base station to be constructed (inter frequency), and a list of PCIs of the same frequency band as that of the base station to be constructed (intra frequency).

In Step B4, the EMS device 400 displays the neighboring-cell setting screen on the GUI unit 125 in the state of displaying the recommended PCIs. Specifically, the EMS device 400 displays the neighboring-cell setting screen while displaying recommended neighboring cells on the basis of the created list.

In Step B6, the neighboring cells are set.

The EMS device 400 may first perform either of operations for setting the neighboring cells illustrated in Fig. 16 and the operations of PCI setting illustrated in Fig. 14, and the timing of performing the operations is not limited.

In addition, the operations illustrated in Fig. 16 are also applicable to the existing base stations, along with the base station to be constructed. For example, the information of the PCI to be set for the base station to be constructed may be applied for updating the neighboring cell lists of the neighboring existing base stations.

Further in Step A6 of Fig. 14, for example, the PCIs that may cause confusion are displayed on the GUI unit 125, however, for examples, PCIs with no possibility of causing confusion may alternatively be displayed on the GUI unit 125.

When part of the fourth exemplary embodiment is applied to a system including a management device 700 and a base station 800, for example, the following configuration is conceivable.

The management device 700 is capable of performing wireless or wired communication with the base station 800.

The management device 700 includes the judgment unit 10, the determination unit 20, and the transmission/reception unit 40.

The base station 800 includes the transmission/reception unit 45 and is capable of performing wireless or wired communication with the management device 700.

The transmission/reception unit 45 transmits and receives various pieces of information to and from the management device 700 by wireless or wired communication.

As described above, the information processing device 100 according to the fourth exemplary embodiment judges whether at least part of the coverage area of the first cell overlaps with the coverage area of the second cell, and determines whether the first cell identification information for identifying the first cell is identical to the second cell identification information assigned in advance to identify the second cell, on the basis of a judgment result of the judgment unit. With this configuration, the information processing device 100 according to the fourth exemplary embodiment produces the effect of reducing the load on the information processing device 100.

One of the advantageous effects of the above-described exemplary embodiments is that it is possible to avoid a burst (transmission of many messages in a short period of time) of control signals relating to PCI assignment by the existing SON function node since PCIs for the base stations are set in advance. This configuration reduces the load on the network itself such as the base stations and the node management device (the EMS device, for example), as well as the node equipped with the SON function.

Each process in the above-described exemplary embodiments may be executed by software. In other words, a computer program to execute each process may be read and executed by a central processing unit (CPU) included in the communication device. The process including the same operations as those of the process in the above-described exemplary embodiments can be performed even when each process is performed using a program. Moreover, the above-described program may be stored in a semiconductor memory device such as a read only memory (ROM), a random access memory (RAM), and a flash memory, or a non-transitory medium such as an optical disk, a magnetic disk, and a magneto-optical disk.

The term "cell" used in the present description and the claims means a base station, a coverage area or sector of a base station, or a combination thereof, according to circumstances.

The term "frequency" used in the present description and the claims means a frequency and a frequency band, or a combination thereof, according to circumstances.

Further, the term "information processing device" used in the present description and the claims means a base station, a control device, a SON function node, or an EMS device, or a combination thereof, according to circumstances. The control device may be a device included in the base station to control the base station itself, or a device provided outside the base station to control subordinate base stations.

Note that the extraction unit 30 in the above-described exemplary embodiments may extract PCIs that may cause confusion, or extract PCIs with no possibility of causing confusion, as candidates for identification information for identifying the first cell.

Reference Signs List

| | |
|---|---|
| 100, 200, 300 | Information processing device |
| 10 | Judgment unit |
| 20 | Determination unit |
| 30 | Extraction unit |
| 40, 43, 45 | Transmission/reception unit |
| 50 | Calculation unit |
| 60 | Information acquisition unit |
| 70 | Storage unit |
| 80 | Input unit |
| 90 | PCI setting unit |
| 95 | PCI control unit |
| 110 | Control unit |
| 120, 125 | Display unit |
| 130 | PCI receiving unit |
| 150 | Base station information management unit |
| 180 | GUI processing unit |
| 310, 400 | EMS device |
| 320 | Base station |
| 500 | EMS client device |
| 600 | Communication system |

**Claims**

1. An information processing device (300) comprising:

   a judgment unit (10) configured to judge whether or not at least part of a coverage area of a first cell overlaps with a coverage area of a second cell;
   an information acquisition unit (60) configured to acquire second cell identification information previously assigned to identify the second cell, from a storage unit (70) which stores the second cell identification information, from another device, or on the basis of information input; and
   a determination unit (20) configured to determine whether first cell identification information for identifying the first cell is identical to the second cell identification information, based on a judgment result of the judgment unit (10).

2. The information processing device (300) according to claim 1, further comprising an extraction unit (30) configured to extract a candidate for identification information for identifying the first cell, based on a determination result of the determination unit (20).

3. The information processing device (300) according to Claim 2,
   wherein the extraction unit (30) does not perform the extracting in a case where the determination result of the determination unit (20) indicates a first condition.

4. The information processing device (300) according to Claim 3,
wherein the case where the determination result indicates the first condition is a case where the first cell identification information is different from the second cell identification information.

5. The information processing device (300) according to any one of Claim 3 or 4,
wherein the first cell identification information and the second cell identification information include at least one of frequency information and physical cell identity, PCI, information,
wherein the frequency information comprises information relating to a frequency, and
wherein the PCI information comprises information relating to a PCI assigned to a cell.

6. The information processing device (300) according to Claim 5,
wherein the determination unit (20) does not perform the determination in a case where the judgment result of the judgment unit (10) indicates a second condition.

7. The information processing device (300) according to Claim 6,
wherein the case where the judgment result indicates the second condition is a case where the coverage area of the first cell and the coverage area of the second cell do not overlap with each other.

8. A communication system comprising:

an information processing device (300); and
a base station (320) connected with the information processing device (300),
wherein the information processing device (300) includes:

a judgment unit (10) configured to judge whether or not at least part of a coverage area of a first cell overlaps with a coverage area of a second cell;
an information acquisition unit (60) configured to acquire second cell identification information previously assigned to identify the second cell, from a storage unit (70) which stores the second cell identification information, from another device, or on the basis of information input; and
a determination unit (20) configured to determine whether first cell identification information for identifying the first cell is identical to the second cell identification information, based on a judgment result of the judgment unit,

wherein the base station (320) receives information acquired based on a determination result of the determination unit.

9. A method of an information processing device (300), the method comprising:

a step of judging whether or not at least part of a coverage area of a first cell overlaps with a coverage area of a second cell;
a step of acquiring second cell identification information previously assigned to identify the second cell, from a storage unit (70) which stores the second cell identification information, from another device, or on the basis of information input; and
a step of determining whether first cell identification information for identifying the first cell is identical to the second cell identification information, based on a judgment result of the judgment.

10. A storage medium storing a computer program comprising computer program code means adapted to cause an information processing device to perform each of the steps of the method according to Claim 9, when executed on the information processing device.

**Patentansprüche**

1. Informationsverarbeitungsvorrichtung (300), die aufweist:

eine Beurteilungseinheit (10), die konfiguriert ist, um zu beurteilen, ob wenigstens ein Teil eines Abdeckungsbereichs einer ersten Zelle mit einem Abdeckungsbereich einer zweiten Zelle überlappt oder nicht;
eine Informationserlangungseinheit (60), die konfiguriert ist, um zweite Zellenidentifikationsinformationen, die früher zugewiesen wurden, um die zweite Zelle zu identifizieren, aus einer Speichereinheit (70), welche die zweiten Zellenidentifikationsinformationen speichert, von einer anderen Vorrichtung oder auf der Basis von eingegebenen Informationen zu erlangen; und
eine Bestimmungseinheit (20), die konfiguriert ist, um basierend auf einem Beurteilungsergebnis der Beurteilungseinheit (10) zu bestimmen, ob die ersten Zellenidentifikationsinformationen zum Identifizieren der ersten Zelle identisch mit den zweiten Zellenidentifikationsinformationen sind.

2.  Informationsverarbeitungsvorrichtung (300) nach Anspruch 1, die ferner eine Extraktionseinheit (30) aufweist, die konfiguriert ist, um basierend auf einem Bestimmungsergebnis der Bestimmungseinheit (20) einen Kandidaten für Identifikationsinformationen zum Identifizieren der ersten Zelle zu extrahieren.

3.  Informationsverarbeitungsvorrichtung (300) nach Anspruch 2,
    wobei die Extraktionseinheit (30) die Extraktion in einem Fall, in dem das Bestimmungsergebnis der Bestimmungseinheit (20) einen ersten Zustand anzeigt, nicht durchführt.

4.  Informationsverarbeitungsvorrichtung (300) nach Anspruch 3,
    wobei der Fall, in dem das Bestimmungsergebnis den ersten Zustand anzeigt, ein Fall ist, in dem die ersten Zellenidentifikationsinformationen verschieden von den zweiten Zellenidentifikationsinformationen sind.

5.  Informationsverarbeitungsvorrichtung (300) nach einem der Ansprüche 3 oder 4,
    wobei die ersten Zellenidentifikationsinformationen und die zweiten Zellenidentifikationsinformationen Frequenzinformationen und/oder physikalische Zellenidentifikations-, PCI-, Informationen umfassen,
    wobei die Frequenzinformationen Informationen bezüglich einer Frequenz aufweisen, und
    wobei die PCI-Informationen Informationen bezüglich einer einer Zelle zugewiesenen PCI umfassen.

6.  Informationsverarbeitungsvorrichtung (300) nach Anspruch 5,
    wobei die Bestimmungseinheit (20) die Bestimmung in einem Fall, in dem das Beurteilungsergebnis der Beurteilungseinheit (10) einen zweiten Zustand anzeigt, nicht durchführt.

7.  Informationsverarbeitungsvorrichtung (300) nach Anspruch 6,
    wobei der Fall, in dem das Beurteilungsergebnis den zweiten Zustand anzeigt, ein Fall ist, in dem der Abdeckungsbereich der ersten Zelle und der Abdeckungsbereich der ersten Zelle nicht miteinander überlappen.

8.  Kommunikationssystem, das aufweist:

    eine Informationsverarbeitungsvorrichtung (300); und
    eine Basisstation (320), die mit der Informationsverarbeitungsvorrichtung (300) verbunden ist,
    wobei die Informationsverarbeitungsvorrichtung (300) umfasst:
    eine Beurteilungseinheit (10), die konfiguriert ist, um zu beurteilen, ob wenigstens ein Teil eines Abdeckungsbereichs einer ersten Zelle mit einem Abdeckungsbereich einer zweiten Zelle überlappt oder nicht;
    eine Informationserlangungseinheit (60), die konfiguriert ist, um zweite Zellenidentifikationsinformationen, die früher zugewiesen wurden, um die zweite Zelle zu identifizieren, aus einer Speichereinheit (70), welche die zweiten Zellenidentifikationsinformationen speichert, von einer anderen Vorrichtung oder auf der Basis von eingegebenen Informationen zu erlangen; und
    eine Bestimmungseinheit (20), die konfiguriert ist, um basierend auf einem Beurteilungsergebnis der Beurteilungseinheit zu bestimmen, ob die ersten Zellenidentifikationsinformationen zum Identifizieren der ersten Zelle identisch mit den zweiten Zellenidentifikationsinformationen sind,
    wobei die Basisstation (320) Informationen, die basierend auf einem Bestimmungsergebnis der Bestimmungseinheit erlangt werden, empfängt.

9.  Verfahren einer Informationsverarbeitungsvorrichtung (300), wobei das Verfahren aufweist:

    einen Schritt zum Beurteilen, ob wenigstens ein Teil eines Abdeckungsbereichs einer ersten Zelle mit einem Abdeckungsbereich einer zweiten Zelle überlappt oder nicht;
    einen Schritt zum Erlangen zweiter Zellenidentifikationsinformationen, die früher zugewiesen wurden, um die zweite Zelle zu identifizieren, aus einer Speichereinheit (70), welche die zweiten Zellenidentifikationsinformationen speichert, von einer anderen Vorrichtung oder auf der Basis von eingegebenen Informationen; und einen Schritt, um basierend auf einem Beurteilungsergebnis der Beurteilung zu bestimmen, ob die ersten Zellenidentifikationsinformationen zum Identifizieren der ersten Zelle identisch mit den zweiten Zellenidentifikationsinformationen sind.

10. Speichermedium, das ein Computerprogramm speichert, das Computerprogrammcodeeinrichtungen aufweist, die geeignet sind, zu bewirken, dass eine Informationsverarbeitungsvorrichtung jeden der Schritte des Verfahrens nach Anspruch 9 durchführt, wenn sie auf der Informationsverarbeitungsvorrichtung ausgeführt werden.

**Revendications**

1. Dispositif de traitement d'informations (300) comprenant :

une unité d'évaluation (10) configurée de manière à évaluer si au moins une partie d'une zone de couverture d'une première cellule chevauche ou non une zone de couverture d'une seconde cellule ;
une unité d'acquisition d'informations (60) configurée de manière à acquérir des secondes informations d'identification de cellule préalablement affectées pour identifier la seconde cellule, à partir d'une unité de stockage (70) qui stocke les secondes informations d'identification de cellule, à partir d'un autre dispositif, ou sur la base d'une entrée d'informations ; et
une unité de détermination (20) configurée de manière à déterminer si des premières informations d'identification de cellule pour identifier la première cellule sont identiques aux secondes informations d'identification de cellule, sur la base d'un résultat d'évaluation de l'unité d'évaluation (10).

2. Dispositif de traitement d'informations (300) selon la revendication 1, comprenant en outre une unité d'extraction (30) configurée de manière à extraire un candidat pour des informations d'identification afin d'identifier la première cellule, sur la base d'un résultat de détermination de l'unité de détermination (20) .

3. Dispositif de traitement d'informations (300) selon la revendication 2,
dans lequel l'unité d'extraction (30) ne met pas en œuvre l'extraction dans un cas où le résultat de détermination de l'unité de détermination (20) indique une première condition.

4. Dispositif de traitement d'informations (300) selon la revendication 3,
dans lequel le cas où le résultat de détermination indique la première condition est un cas où les premières informations d'identification de cellule sont différentes des secondes informations d'identification de cellule.

5. Dispositif de traitement d'informations (300) selon l'une quelconque des revendications 3 et 4,
dans lequel les premières informations d'identification de cellule et les secondes informations d'identification de cellule incluent au moins l'une parmi des informations de fréquence et des informations d'identité de cellule physique, PCI ;
dans lequel les informations de fréquence comprennent des informations connexes à une fréquence ; et
dans lequel les informations d'identité PCI comprennent des informations connexes à une identité PCI affectée à une cellule.

6. Dispositif de traitement d'informations (300) selon la revendication 5,
dans lequel l'unité de détermination (20) ne met pas en œuvre la détermination dans un cas où le résultat d'évaluation de l'unité d'évaluation (10) indique une seconde condition.

7. Dispositif de traitement d'informations (300) selon la revendication 6,
dans lequel le cas où le résultat d'évaluation indique la seconde condition est un cas où la zone de couverture de la première cellule et la zone de couverture de la seconde cellule ne se chevauchent pas mutuellement.

8. Système de communication comprenant :

un dispositif de traitement d'informations (300) ; et
une station de base (320) connectée au dispositif de traitement d'informations (300) ;
dans lequel le dispositif de traitement d'informations (300) inclut :

une unité d'évaluation (10) configurée de manière à évaluer si au moins une partie d'une zone de couverture d'une première cellule chevauche ou non une zone de couverture d'une seconde cellule ;

une unité d'acquisition d'informations (60) configurée de manière à acquérir des secondes informations d'identification de cellule préalablement affectées pour identifier la seconde cellule, à partir d'une unité de stockage (70) qui stocke les secondes informations d'identification de cellule, à partir d'un autre dispositif, ou sur la base d'une entrée d'informations ; et

une unité de détermination (20) configurée de manière à déterminer si des premières informations d'identification de cellule pour identifier la première cellule sont identiques aux secondes informations d'identification de cellule, sur la base d'un résultat d'évaluation de l'unité d'évaluation (10) ;

dans lequel la station de base (320) reçoit des informations acquises sur la base d'un résultat de détermination de l'unité de détermination.

9. Procédé d'un dispositif de traitement d'informations (300), le procédé comprenant :

une étape consistant à évaluer si au moins une partie d'une zone de couverture d'une première cellule chevauche ou non une zone de couverture d'une seconde cellule ;

une étape d'acquisition de secondes informations d'identification de cellule préalablement affectées pour identifier la seconde cellule, à partir d'une unité de stockage (70) qui stocke les secondes informations d'identification de cellule, à partir d'un autre dispositif, ou sur la base d'une entrée d'informations ; et

une étape consistant à déterminer si des premières informations d'identification de cellule pour identifier la première cellule sont identiques aux secondes informations d'identification de cellule, sur la base d'un résultat d'évaluation de l'évaluation.

10. Support de stockage stockant un programme informatique comprenant un moyen de code de programme informatique apte à amener un dispositif de traitement d'informations à mettre en œuvre chacune des étapes du procédé selon la revendication 9, lorsqu'il est exécuté sur le dispositif de traitement d'informations.

# Fig.1

100

### JUDGMENT UNIT
10

### DETERMINATION UNIT
20

# Fig.2A

FIRST CELL
FIRST CELL IDENTIFICATION
INFORMATION: 100

SECOND CELL
SECOND CELL IDENTIFICATION
INFORMATION: 200

# Fig.2B

FIRST CELL
   FIRST CELL IDENTIFICATION
   INFORMATION: 100

SECOND CELL
   SECOND CELL IDENTIFICATION
   INFORMATION: 200

# Fig.3

S1

JUDGE WHETHER AT LEAST PART OF COVERAGE AREA OF FIRST CELL
OVERLAPS WITH COVERAGE AREA OF SECOND CELL

S2

DETERMINE WHETHER FIRST CELL IDENTIFICATION INFORMATION FOR
IDENTIFYING FIRST CELL IS IDENTICAL TO SECOND CELL IDENTIFICATION
INFORMATION PREVIOUSLY ASSIGNED TO IDENTIFY SECOND CELL,
ACCORDING TO JUDGMENT RESULT OF JUDGMENT UNIT

Fig.4

200

10

JUDGMENT UNIT

20

DETERMINATION UNIT

30

EXTRACTION UNIT

## Fig.5

S1

JUDGE WHETHER AT LEAST PART OF COVERAGE AREA OF FIRST CELL OVERLAPS WITH COVERAGE AREA OF SECOND CELL

S2

DETERMINE WHETHER FIRST CELL IDENTIFICATION INFORMATION FOR IDENTIFYING FIRST CELL IS IDENTICAL TO SECOND CELL IDENTIFICATION INFORMATION ASSIGNED PREVIOUSLY TO IDENTIFY SECOND CELL, ACCORDING TO JUDGMENT RESULT OF JUDGMENT UNIT

S3

EXTRACT CANDIDATE FOR IDENTIFICATION INFORMATION FOR IDENTIFYING FIRST CELL, ACCORDING TO DETERMINATION RESULT OF DETERMINATION UNIT

## Fig.6

| CANDIDATES FOR IDENTIFICATION INFORMATION FOR IDENTIFYING FIRST CELL |
|---|
| 300 |
| 301 |
| 302 |
| ... |

**Fig.7**

EP 3 128 775 B1

# Fig.8

START JUDGMENT

S4

AT LEAST PART OF COVERAGE AREA OF FIRST CELL OVERLAPS WITH COVERAGE AREA OF SECOND CELL

No

Yes

S5

WHETHER TO COMPARE FIRST FREQUENCY INFORMATION WITH SECOND FREQUENCY INFORMATION

No

Yes

( 1 )

( 2 )

DETERMINATION UNIT DOES NOT PERFORM DETERMINATION

EP 3 128 775 B1

# Fig.9

EP 3 128 775 B1

Fig.10

## Fig.11

```
              ┌─────────────────────────────────────────┐ ⟋S14
              │      INPUT INFORMATION TO INPUT UNIT 80   │
              └─────────────────────────────────────────┘
                                  │
                                  ▼                        ⟋S15
              ┌─────────────────────────────────────────┐
              │   CALCULATE COVERAGE AREA OF FIRST CELL   │
              │    AND COVERAGE AREA OF SECOND CELL       │
              └─────────────────────────────────────────┘
                                  │
                                  ▼                        ⟋S1
              ┌─────────────────────────────────────────┐
              │  JUDGE WHETHER AT LEAST PART OF COVERAGE  │
              │  AREA OF FIRST CELL OVERLAPS WITH         │
              │  COVERAGE AREA OF SECOND CELL             │
              └─────────────────────────────────────────┘
                                  │
                                  ▼                        ⟋S2
```

INPUT INFORMATION TO INPUT UNIT 80

CALCULATE COVERAGE AREA OF FIRST CELL AND COVERAGE AREA OF SECOND CELL

JUDGE WHETHER AT LEAST PART OF COVERAGE AREA OF FIRST CELL OVERLAPS WITH COVERAGE AREA OF SECOND CELL

DETERMINE WHETHER FIRST CELL IDENTIFICATION INFORMATION FOR IDENTIFYING FIRST CELL IS IDENTICAL TO SECOND CELL IDENTIFICATION INFORMATION ASSIGNED PREVIOUSLY TO IDENTIFY SECOND CELL, ACCORDING TO JUDGMENT RESULT OF JUDGMENT UNIT

EXTRACT CANDIDATE FOR IDENTIFICATION INFORMATION FOR IDENTIFYING FIRST CELL, ACCORDING TO DETERMINATION RESULT OF DETERMINATION UNIT

DISPLAY CANDIDATE FOR IDENTIFICATION INFORMATION TO IDENTIFY FIRST CELL, ACCORDING TO EXTRACTION RESULT OF EXTRACTION UNIT

SELECT IDENTIFICATION INFORMATION FOR IDENTIFYING FIRST CELL, ACCORDING TO DISPLAY

SET SELECTED IDENTIFICATION INFORMATION AS IDENTIFICATION INFORMATION FOR IDENTIFYING FIRST CELL, ACCORDING TO SELECTION RESULT

# Fig.12

310

JUDGMENT UNIT — 10

DETERMINATION UNIT — 20

PCI SETTING UNIT — 90

TRANSMISSION/ RECEPTION UNIT — 40

320

PCI RECEIVING UNIT — 130

TRANSMISSION/ RECEPTION UNIT — 43

Fig.13

# Fig.14

```
┌─────────────────────────────────────┐
│   INPUT VARIOUS PIECES OF INFORMATION │  ～ A1
│           TO GUI UNIT 125             │
└─────────────────────────────────────┘
                  │
                  ▼
┌─────────────────────────────────────┐
│   CALCULATE COVERAGE AREA OF CELL     │  ～ A2
└─────────────────────────────────────┘
                  │
                  ▼
              ◇ A3
         IS THERE ANY EXISTING          NO
      STATION HAVING OVERLAPPING    ──────────►
            COVERAGE AREA?
                  │
                 YES
                  ▼
┌─────────────────────────────────────┐
│ ACQUIRE PCI LIST OF EXISTING BASE STATIONS EACH HAVING AT │  ～ A4
│   LEAST PARTLY OVERLAPPING COVERAGE AREA  │
└─────────────────────────────────────┘
                  │
                  ▼
┌─────────────────────────────────────┐
│ DISPLAY, ON GUI UNIT 125, MESSAGE THAT INPUT PCI MAY CAUSE │  ～ A5
│              CONFUSION                │
└─────────────────────────────────────┘
                  │
                  ▼
┌─────────────────────────────────────┐
│ DISPLAY, ON GUI UNIT 125, PCI THAT MAY CAUSE CONFUSION │  ～ A6
└─────────────────────────────────────┘
                  │
                  ▼
              ◇ A7
         RECEIVE OVERLAPPING PCI?        NO
                                    ──────────►
                  │
                 YES
                  ▼
┌─────────────────────────────────────┐
│               SET PCI                 │  ～ A8
└─────────────────────────────────────┘
```

**INPUT VARIOUS PIECES OF INFORMATION TO GUI UNIT 125** — A1

**CALCULATE COVERAGE AREA OF CELL** — A2

**IS THERE ANY EXISTING STATION HAVING OVERLAPPING COVERAGE AREA?** — A3 — NO / YES

**ACQUIRE PCI LIST OF EXISTING BASE STATIONS EACH HAVING AT LEAST PARTLY OVERLAPPING COVERAGE AREA** — A4

**DISPLAY, ON GUI UNIT 125, MESSAGE THAT INPUT PCI MAY CAUSE CONFUSION** — A5

**DISPLAY, ON GUI UNIT 125, PCI THAT MAY CAUSE CONFUSION** — A6

**RECEIVE OVERLAPPING PCI?** — A7 — NO / YES

**SET PCI** — A8

# Fig.15

CR:Cell Radius
$\alpha$ :POSITION OF BASE STATION

# Fig.16

```
┌──────────────────────────────────────────┐
│ COMPARE COVERAGE AREA WITH EACH OF         │ ～ B1
│ COVERAGE AREAS OF EXISTING BASE STATIONS   │
└──────────────────────────────────────────┘
                    │
                    ▼
              B2
          ◇◇◇◇◇◇◇◇◇◇◇◇◇◇◇◇◇◇◇◇◇
       ◇     IS THERE ANY EXISTING     ◇      NO
      ◇  BASE STATION HAVING OVERLAPPING ◇ ─────────┐
       ◇      COVERAGE AREA?          ◇             │
          ◇◇◇◇◇◇◇◇◇◇◇◇◇◇◇◇◇◇◇◇◇             │
                    │ YES                            │
                    ▼                                │
┌──────────────────────────────────────────┐        │
│ ACQUIRE INFORMATION OF EXISTING BASE STATIONS│ ～ B3 │
│ EACH HAVING AT LEAST PARTLY OVERLAPPING    │        │
│ COVERAGE AREA                              │        │
└──────────────────────────────────────────┘        │
                    │                                │
                    ▼                                │
┌──────────────────────────────────────────┐        │
│ DISPLAY NEIGHBORING CELL SETTING SCREEN ON GUI│ ～ B4 │
│ UNIT 125 IN STATE OF DISPLAYING RECOMMENDED PCIs│     │
└──────────────────────────────────────────┘        │
                    │                      B5         │
                    │          ┌────────────────────────┐
                    │          │ ACQUIRE PCI LIST OF EXISTING│
                    │          │ BASE STATIONS EACH HAVING AT LEAST│
                    │          │ PARTLY OVERLAPPING COVERAGE AREA│
                    │          └────────────────────────┘
                    ▼
┌──────────────────────────────────────────┐
│        SET NEIGHBORING CELLS               │ ～ B6
└──────────────────────────────────────────┘
```

**EP 3 128 775 B1**

**REFERENCES CITED IN THE DESCRIPTION**

**Patent documents cited in the description**

- JP 2010268463 A
- JP 2012085201 A
- WO 2013078573 A
- US 2010317351 A